# EUROPEAN PATENT APPLICATION

(11) **EP 4 682 120 A1**
(43) Date of publication of application: **21.01.2026**
(21) Application number: 24774512.8
(22) Date of filing: 14.02.2024
(51) Int. Cl.: C03B 37/012, G02B 6/02

(54) **METHOD FOR MANUFACTURING MULTICORE OPTICAL FIBER AND MULTICORE OPTICAL FIBER PREFORM**

(30) Priority: 17.03.2023 JP 2023042979
(71) Applicant: Sumitomo Electric Industries, Ltd., Osaka-shi, Osaka 541-0041 (JP)
(72) Inventor: NAGASHIMA Takuji, Osaka-shi, Osaka 541-0041 (JP); NOMURA Takahiro, Osaka-shi, Osaka 541-0041 (JP)
(74) Representative: TBK
(86) International application number: PCT/JP2024/005020
(87) International publication number: WO 2024/195366

(57) **Abstract**

This method of manufacturing a multicore optical fiber includes: a step for inserting multiple glass rods into multiple holes provided in a glass tube; a step for sealing a first end of the glass tube; and a step for decompressing the inside of the multiple holes from a second end of the glass tube and drawing the glass tube and the multiple glass rods while integrating same. When the cross-sectional area of the glass tube before the drawing step is defined as S1 [m²], the sum of the cross-sectional areas of the multiple glass rods before the drawing step is defined as S2 [m²], and the cross-sectional area of the multicore optical fiber after the drawing step is defined as S3 [m²], the inserting step is carried out so that the sum of the areas of gaps between the glass tube and the multiple glass rods before the drawing step in a cross-section orthogonal to the axial direction of the glass tube is equal to or less than (S1 + S2)/S3 × 5.66 × 10⁻⁴ [mm²], and the inserting step is carried out in an environment having cleanliness higher than class 1,000.

## Description

### TECHNICAL FIELD

The present disclosure relates to a method of manufacturing a multicore optical fiber (hereinafter, referred to as MCF) and an MCF preform. This application claims priority based on Japanese Patent Application No. 2023-042979 filed on March 17, 2023, the entire contents of which are incorporated herein by reference.

### BACKGROUND ART

In an MCF, the core density can be improved by arranging a plurality of cores in one fiber. Thus, the number of cores can be increased while the outer diameter of an optical fiber cable is kept constant. Further, the outer diameter of the optical fiber cable can be reduced while the number of cores incorporated in the optical fiber cable is kept constant. The MCF can reduce the core-to-core distance as compared with a fiber array formed by arranging conventional optical fibers. Thus, the utilization of MCF as a high-density optical wiring is expected.

Patent literature 1 discloses a method of manufacturing an optical fiber, in which a core rod is inserted into an outer overclad tube by a rod-in-tube (RIT) method to assemble a preform, and then an end of the preform is heated to draw the outer overclad tube and the core rod while consolidating them. Patent literature 2 discloses a method of manufacturing an optical fiber, in which a first overclad tube is inserted into a second overclad tube by the RIT method, a core rod segment is inserted into the first overclad tube to assemble a preform, and then the lower end of the preform is heated to draw the first overclad tube and the second overclad tube while reducing the diameters thereof.

### CITATION LIST

### PATENT LITERATURE

Patent literature 1: Japanese Unexamined Patent Application Publication No. 2004-182595
Patent literature 2: Japanese Unexamined Patent Application Publication No. 2006-265095

### SUMMARY OF INVENTION

A method of manufacturing an MCF according to an aspect of the present disclosure is a method of manufacturing an MCF including a plurality of cores and a cladding surrounding the plurality of cores. The method includes inserting each of a plurality of glass rods into a corresponding one of a plurality of holes provided in a glass tube, sealing a first end of the glass tube, and drawing the glass tube and the plurality of glass rods while integrating the glass tube and the plurality of glass rods and reducing a pressure inside the plurality of holes through a second end of the glass tube. When a cross-sectional area of the glass tube before the drawing is denoted by S1 [m²], a sum of cross-sectional areas of the plurality of glass rods before the drawing is denoted by S2 [m²], and a cross-sectional area of the MCF after the drawing is denoted by S3 [m²], the inserting is performed such that a sum of areas of gaps between the glass tube and the plurality of glass rods before the drawing in a cross section orthogonal to an axial direction of the glass tube is (S1 + S2)/S3 × 5.66 × 10⁻⁴ [mm²] or less. The inserting is performed in an environment having a cleanliness level of higher than class 1000.

### BRIEF DESCRIPTION OF THE DRAWINGS

[FIG. 1] FIG. 1 is a cross-sectional view orthogonal to an axial direction of an MCF according to an embodiment.
[FIG. 2] FIG. 2 is a flowchart showing a method of manufacturing the MCF according to the embodiment.
[FIG. 3] FIG. 3 is a cross-sectional view for explaining a preparing step.
[FIG. 4] FIG. 4 is a cross-sectional view orthogonal to an axial direction of a glass tube.
[FIG. 5] FIG. 5 is a cross-sectional view for explaining a connecting step.
[FIG. 6] FIG. 6 is a cross-sectional view for explaining an inserting step.
[FIG. 7] FIG. 7 is a cross-sectional view orthogonal to an axial direction of an MCF preform according to the embodiment.
[FIG. 8] FIG. 8 is a cross-sectional view for explaining a sealing step.
[FIG. 9] FIG. 9 is a cross-sectional view for explaining a drawing step.
[FIG. 10] FIG. 10 is a cross-sectional view orthogonal to the axial direction of the MCF preform according to a modification.
[FIG. 11] FIG. 11 is a cross-sectional view orthogonal to an axial direction of an optical fiber preform.
[FIG. 12] FIG. 12 is a graph showing the relationship between the cladding diameter and the fiber length obtained from one preform.

### DETAILED DESCRIPTION

### [Problems to be Solved by Present Disclosure]

In the method of manufacturing described above, after inserting the glass rod to be a core into the glass tube to be a cladding to assemble the preform, it is drawn without undergoing a cleaning process by the gas phase inside the glass tube. Thus, there is a high possibility that the drawing is performed in a state where the foreign substances are mixed between the glass tube and the glass rod. In general, as the number of cores increases, the area of the gap between the glass tube and the glass rod in the cross section orthogonal to the axial direction of the glass tube increases. This leads to an increase in the number of foreign substances that mix with the preform from the surrounding environment. Further, increasing the cladding diameter to accommodate more cores reduces the fiber length that can be obtained from the same size preform. Thus, the number of quality abnormal portions per unit fiber length is likely to increase.

The present disclosure provides the method of manufacturing the MCF and the MCF preform capable of reducing the frequency of quality abnormalities.

### [Advantageous Effects of Present Disclosure]

According to the present disclosure, it is possible to provide the method of manufacturing the MCF and the MCF preform capable of reducing the frequency of quality abnormalities.

### [Description of Embodiments of the Present Disclosure]

First, embodiments of the present disclosure will be listed and described. (1) A method of manufacturing an MCF according to an aspect of the present disclosure is a method of manufacturing an MCF including a plurality of cores and a cladding surrounding the plurality of cores. The method includes inserting each of a plurality of glass rods into a corresponding one of a plurality of holes provided in a glass tube, sealing a first end of the glass tube, and drawing the glass tube and the plurality of glass rods while integrating the glass tube and the plurality of glass rods and reducing a pressure inside the plurality of holes through a second end of the glass tube. When a cross-sectional area of the glass tube before the drawing is denoted by S1 [m²], a sum of cross-sectional areas of the plurality of glass rods before the drawing is denoted by S2 [m²], and a cross-sectional area of the MCF after the drawing is denoted by S3 [m²], the inserting is performed such that a sum of areas of gaps between the glass tube and the plurality of glass rods before the drawing in a cross section orthogonal to an axial direction of the glass tube is (S1 + S2)/S3 × 5.66 × 10⁻⁴ [mm²] or less. The inserting is performed in an environment having a cleanliness level of higher than class 1000. In the method of manufacturing the MCF, the frequency of quality abnormalities can be reduced to 0.02 /km or less.

(2) In the above (1), the inserting may be performed such that the sum of the areas of the gaps is (S1 + S2)/S3 × 1.42 × 10⁻³ [mm²] or less. In this case, the frequency of quality abnormalities can be reduced to 0.05 /km or less.

(3) In the above (1), the inserting may be performed such that the sum of the areas of the gaps is (S1 + S2)/S3 × 2.83 × 10⁻³ [mm²] or less. In this case, the frequency of quality abnormalities can be reduced to 0.10 /km or less.

(4) A method of manufacturing an MCF according to another aspect of the present disclosure is a method of manufacturing an MCF including a plurality of cores and a cladding surrounding the plurality of cores. The method includes inserting each of a plurality of glass rods into a corresponding one a plurality of holes provided in a glass tube, sealing a first end of the glass tube, and drawing the glass tube and the plurality of glass rods while integrating the glass tube and the plurality of glass rods and reducing a pressure inside the plurality of holes through a second end of the glass tube. When a cross-sectional area of the glass tube before the drawing is denoted by S1 [m²], a sum of cross-sectional areas of the plurality of glass rods before the drawing is denoted by S2 [m²], and a cross-sectional area of the MCF after the drawing is denoted by S3 [m²], the inserting is performed such that a sum of areas of gaps between the glass tube and the plurality of glass rods before the drawing in a cross section orthogonal to an axial direction of the glass tube is (S1 + S2)/S3 × 5.66 × 10⁻⁵ [mm²] or less. The inserting is performed in an environment having a cleanliness level of higher than class 10000. In the method of manufacturing the MCF, the frequency of quality abnormalities can be reduced to 0.02 /km or less.

(5) In the above (4), the inserting may be performed such that the sum of the areas of the gaps is (S1 + S2)/S3 × 1.42 × 10⁻⁴ [mm²] or less. In this case, the frequency of quality abnormalities can be reduced to 0.05 /km or less.

(6) In the above (4), the inserting may be performed such that the sum of the areas of the gaps is (S1 + S2)/S3 × 2.83 × 10⁻⁴ [mm²] or less. In this case, the frequency of quality abnormalities can be reduced to 0.10 /km or less.

(7) An MCF preform according to an aspect of the present disclosure is the preform for the MCF including a plurality of cores and a cladding surrounding the plurality of cores. The MCF preform includes a glass tube provided with a plurality of holes, and a plurality of glass rods inserted into the plurality of holes. When a cross-sectional area of the glass tube before drawing is denoted by S1 [m²], a sum of cross-sectional areas of the plurality of glass rods before the drawing is denoted by S2 [m²], and a cross-sectional area of an MCF after the drawing is denoted by S3 [m²], a sum of areas of gaps between the glass tube and the plurality of glass rods before the drawing in a cross section orthogonal to an axial direction of the glass tube is (S1 + S2)/S3 × 5.66 × 10⁻⁴ [mm²] or less. The gaps have a cleanliness level of higher than class 1000. In the MCF preform, the frequency of quality abnormalities can be reduced to 0.02 /km or less.

(8) An MCF preform according to another aspect of the present disclosure is the preform for the MCF including a plurality of cores and a cladding surrounding the plurality of cores. The MCF preform includes a glass tube provided with a plurality of holes, and a plurality of glass rods inserted into the plurality of holes. When a cross-sectional area of the glass tube before drawing is denoted by S1 [m²], a sum of cross-sectional areas of the plurality of glass rods before the drawing is denoted by S2 [m²], and a cross-sectional area of an MCF after the drawing is denoted by S3 [m²], a sum of areas of gaps between the glass tube and the plurality of glass rods before the drawing in a cross section orthogonal to an axial direction of the glass tube is (S1 + S2)/S3 × 5.66 × 10⁻⁵ [mm²] or less. The gaps have a cleanliness level of higher than class 10000. In the MCF preform, the frequency of quality abnormalities can be reduced to 0.02 /km or less.

### [Details of Embodiments of Present Disclosure]

Specific examples of a method of manufacturing an MCF and an MCF preform of the present disclosure will be described below with reference to the drawings. The present disclosure is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

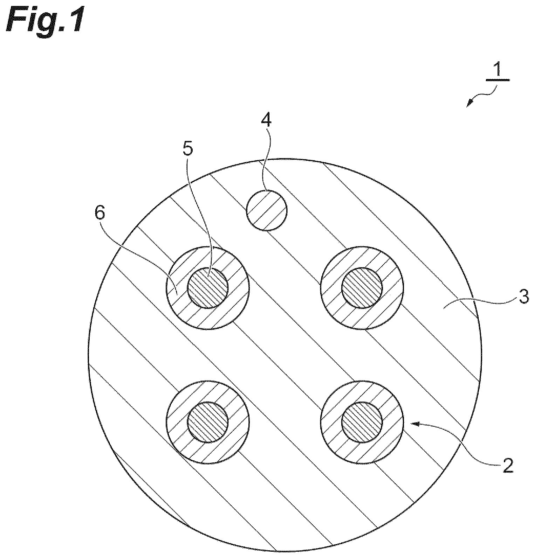

FIG. 1 is a cross-sectional view orthogonal to an axial direction AD1 of the MCF according to the embodiment. As shown in FIG. 1, an MCF 1 includes a plurality of cores 2, a common cladding 3, and a marker 4 for identifying each core 2. The axial direction AD1 is a direction in which the MCF 1 extends, and is a direction parallel to the central axis of the MCF 1.

The plurality of cores 2 extend along the axial direction AD1 of the MCF 1. In the embodiment, the number of core 2 is four. The plurality of cores 2 are arranged at positions that are rotationally symmetric with respect to the center of the MCF 1 in a cross section orthogonal to the axial direction AD1. The cross section shapes of the plurality of cores 2 are the same circular shape. In the embodiment, the number of the cores 2 is four, and the MCF 1 is a four core fiber, but the embodiment is not limited thereto. The core 2 includes a center core 5 and an optical cladding 6. The diameter of the center core 5 is, for example, 6 µm to 12 µm.

The cladding 3 surrounds the plurality of cores 2 and the marker 4. The cladding 3 is provided in contact with the outer peripheral surface of each of the plurality of cores 2 and the marker 4. The diameter of the cladding 3 (cladding diameter) is, for example, 124 µm to 126 µm.

In general, the refractive index of the center core 5 is higher than the refractive index of the common cladding 3, and the refractive index of the optical cladding 6 is smaller than or equivalent to the refractive index of the common cladding 3. Each of the center core 5, the optical cladding 6, and the common cladding 3 contains silica-based glass as a main component. Silica-based glass is glass containing silica in an amount of 50% or more. Each of the center core 5, the optical cladding 6, and the common cladding 3 contains a dopant for refractive index adjustment. As additive element for increasing the refractive index, germanium is well known. As additive elements for lowering the refractive index, fluorine and boron are well known.

The marker 4 is provided to identify each core 2. The marker 4 is provided at a position away from the central axis of the MCF 1. The marker 4 is provided at a position away from each core 2. The diameter of the marker 4 is, for example, smaller than the diameter of the core 2, and is 2 µm to 10 µm. The marker 4 is distinguished from the core 2 by, for example, being colored. The marker 4 has, for example, a refractive index different from a refractive index of the cladding 3. The marker 4 contains silica-based glass as a main component. Silica-based glass is glass containing silica in an amount of 50% or more. The marker 4 includes, for example, a dopant for coloring or for adjusting the refractive index.

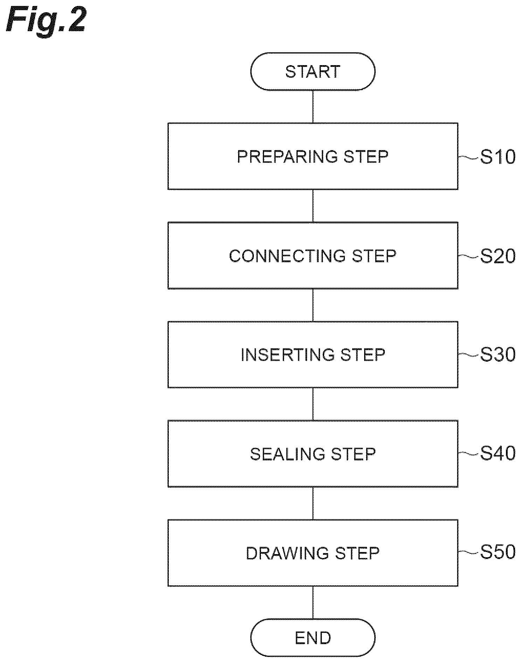

FIG. 2 is a flowchart showing the method of manufacturing the MCF according to the embodiment. As shown in FIG. 2, the method of manufacturing the MCF 1 includes a preparing step S10, a connecting step S20, an inserting step S30, a sealing step S40, and a drawing step S50. The MCF 1 is manufactured by, for example, performing the preparing step S10, the connecting step S20, the inserting step S30, the sealing step S40, and the drawing step S50 in this order. The MCF 1 is manufactured by the RIT method.

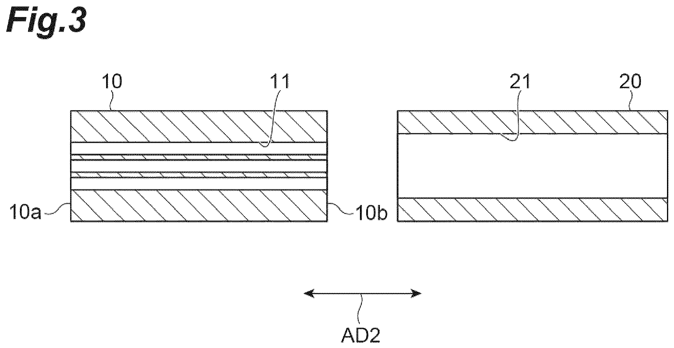

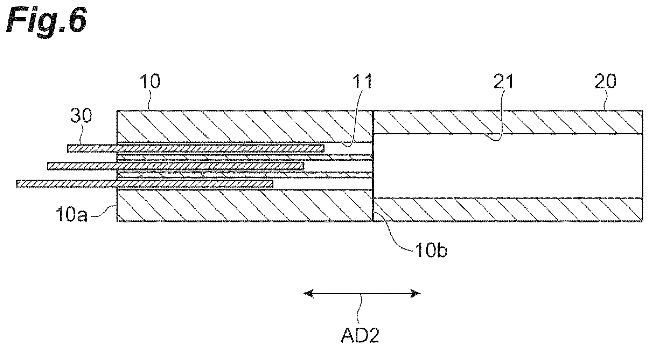

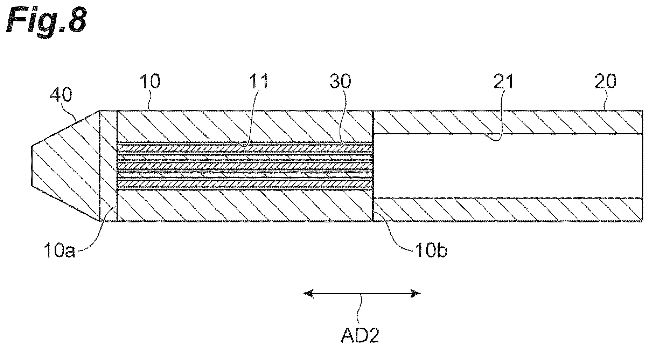

FIG. 3 is a cross-sectional view for explaining the preparing step. The preparing step S10 is a step of preparing a glass tube 10 and a dummy tube 20 shown in FIG. 3. In the preparing step S10, a glass rod 30 (see FIG. 6) and a sealing portion 40 (see FIG. 8), which will be described later, may be prepared in addition to the glass tube 10 and the dummy tube 20.

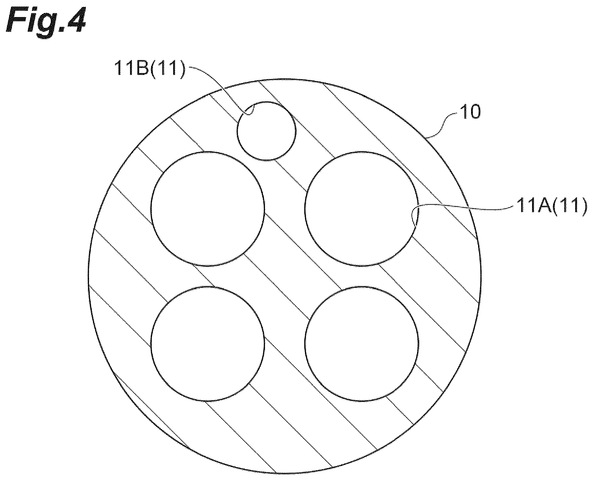

FIG. 4 is a cross-sectional view orthogonal to an axial direction AD2 of the glass tube. The glass tube 10 shown in FIG. 3 and FIG. 4 are a common cladding tube that becomes the cladding 3. The axial direction AD2 is a direction in which the glass tube 10 extends, and is a direction parallel to the central axis of the glass tube 10. An axial direction D2 is parallel to an axial direction D1. The glass tube 10 has a first end 10a and a second end 10b in the axial direction AD2. The first end 10a and the second end 10b are both end surfaces of the glass tube 10.

The glass tube 10 is provided with a plurality of holes 11. The plurality of holes 11 penetrate the glass tube 10 in the axial direction AD2 and are open at the first end 10a and the second end 10b, respectively. The plurality of holes 11 have a cross section circular shape. The plurality of holes 11 include a plurality of holes 11A provided at positions corresponding to the plurality of cores 2 and a hole 11B provided at a position corresponding to the marker 4. For example, the inner diameter of the hole 11A is larger than the inner diameter of the hole 11B. The glass tube 10 is formed by forming the plurality of holes 11 in a cylindrical glass rod by, for example, a drill.

The dummy tube 20 shown in FIG. 3 is a cylindrical glass tube provided with a hole 21. The dummy tube 20 is used to hold the glass tube 10. The dummy tube 20 has an outer diameter similar to an outer diameter of the glass tube 10. The outer diameter of the dummy tube 20 may be smaller than the outer diameter of the glass tube 10 in a range where the hole 21 communicates with the hole 11.

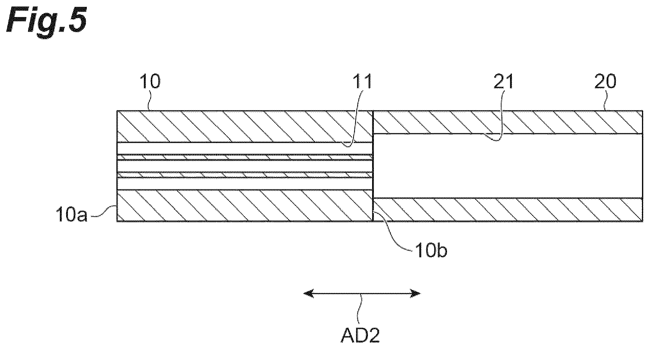

FIG. 5 is a cross-sectional view for explaining a connecting step. The connecting step S20 is a step of connecting the dummy tube 20 to the second end 10b of the glass tube 10 as shown in FIG. 5. The glass tube 10 and the dummy tube 20 are connected to each other so as to be coaxial with each other. The dummy tube 20 is fusion-connected to the second end 10b such that at least a part of each of all the holes 11 overlaps the hole 21 when viewed along the axial direction AD2.

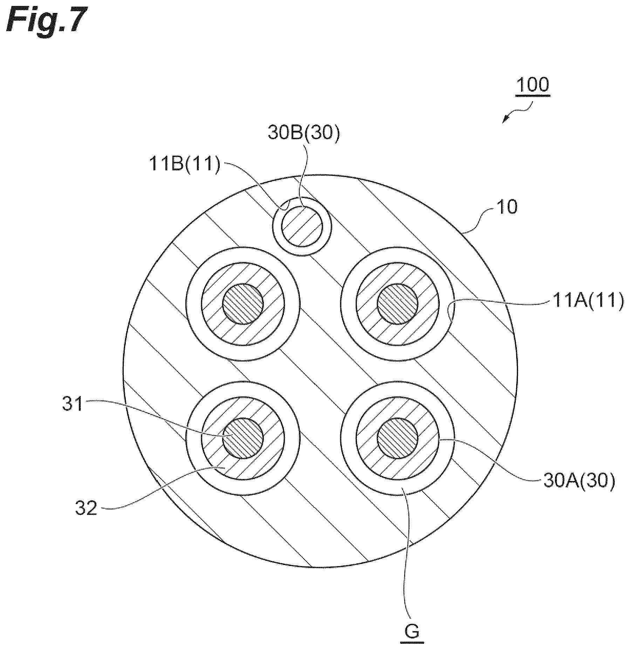

FIG. 6 is a cross-sectional view for explaining the inserting step. The inserting step S30 is a step of inserting the plurality of glass rods 30 into the plurality of holes 11 provided in the glass tube 10, as shown in FIG. 6. The plurality of glass rods 30 are inserted into the plurality of holes 11 one by one. In the embodiment, the plurality of glass rods 30 are inserted into the plurality of holes 11 from the first end 10a side. The plurality of glass rods 30 may pass through the hole 21 of the dummy tube 20 and may be inserted into the plurality of holes 11 from the second end 10b side. As a result, an MCF preform 100 (see FIG. 7) is obtained.

FIG. 7 is a cross-sectional view orthogonal to the axial direction AD2 of an MCF preform according to an embodiment. The MCF preform 100 shown in FIG. 7 is a preform for the MCF 1. The MCF preform 100 includes the glass tube 10 provided with the plurality of holes 11, and the plurality of glass rods 30 inserted into the plurality of holes 11. The glass rod 30 has a cylindrical shape. The outer diameter of the glass rod 30 is set to a size that can be inserted into the corresponding hole 11. The plurality of glass rods 30 include a glass rod 30A (core rod) serving as the core 2 and a glass rod 30B (marker rod) serving as the marker 4. The glass rod 30A includes a center core portion 31 serving as the center core 5 and an optical cladding portion 32 serving as the optical cladding 6. The outer diameter of the glass rod 30A is smaller than the inner diameter of the hole 11A. The outer diameter of the glass rod 30B is smaller than the inner diameter of the hole 11B. Thus, a plurality of gaps G are formed between the glass tube 10 and the plurality of glass rods 30. In the MCF preform 100, the inner surface of the hole 11 and the outer peripheral surface of the glass rod 30 are not bonded to each other.

FIG. 8 is a cross-sectional view for explaining the sealing step. The sealing step S40 is a step of sealing the first end 10a of the glass tube 10 as shown in FIG. 8. In the sealing step S40, the first end 10a is sealed by melt-bonding the sealing portion 40 composed of a glass block to the first end 10a. The sealing portion 40 covers substantially the entire first end 10a and seals the openings of the plurality of holes 11 at the first end 10a.

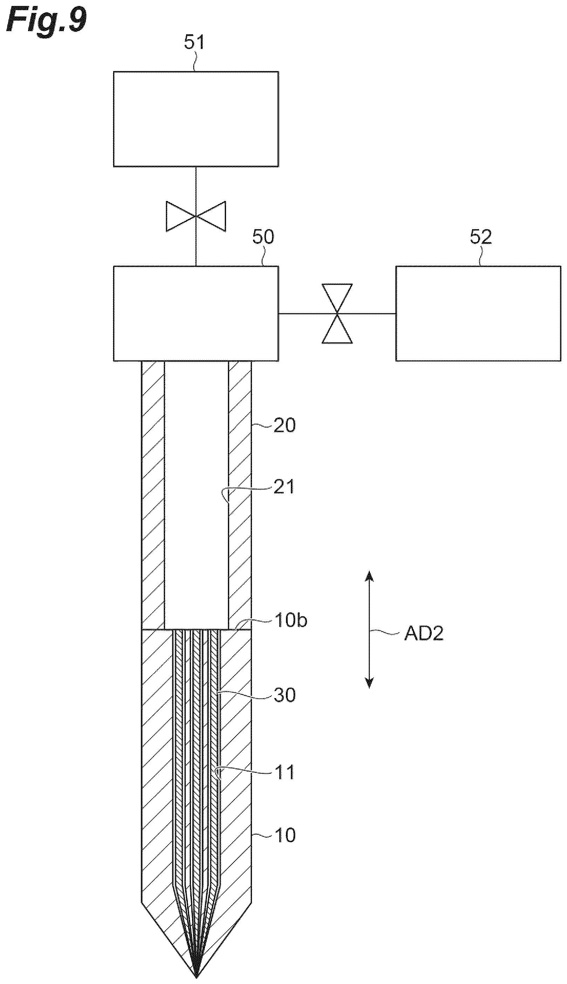

FIG. 9 is a cross-sectional view for explaining the drawing step. As shown in FIG. 9, the drawing step S50 is a step of reducing a pressure inside the plurality of holes 11 (specifically, the gap G (see FIG. 7)) from the second end 10b of the glass tube 10, and drawing the glass tube 10 and the plurality of glass rods 30 while integrating them by heating. Thus, the MCF 1 is obtained.

The drawing step S50 is performed in a state where a coupler 50 is connected to the dummy tube 20. A vacuum pump 51 and a gas supply portion 52 are connected to the coupler 50 with valves, respectively. The vacuum pump 51 reduces the pressure inside the plurality of holes 11 through the coupler 50 and the dummy tube 20 during the drawing step S50. The gas supply portion 52 supplies clean gas to the inside of the plurality of holes 11 through the coupler 50 and the dummy tube 20 when the vacuum pump 51 is stopped during the drawing. The gas supply portion 52 prevents the surrounding air from entering the plurality of holes 11 during the stoppage of the vacuum pump 51, thereby reduces the contamination of the MCF preform 100. The gas supply portion 52 may supply oxygen or noble gas to the inside of the plurality of holes 11 at the same time as the vacuum pump 51 reducing a pressure inside of the plurality of holes 11.

In the RIT method, after the plurality of glass rods 30 are inserted into the glass tube 10 in the inserting step S30, the inner surface of the glass tube 10 (the inner surfaces of the plurality of holes 11) may be subjected to a gas phase treatment to remove foreign substances, as in the rod-in collapse method. However, in order to reduce the pressure inside the glass tube 10 in the drawing step S50, it is necessary to open the first end 10a of the glass tube 10. Thus, even when the foreign substances are removed, the inside of the glass tube 10 will subsequently be exposed to the surrounding atmosphere. Thus, the effect of the gas phase treatment is limited in the RIT method, and it is considered that increasing the cleanliness level of the surrounding atmosphere is effective for avoiding the contamination of foreign substances.

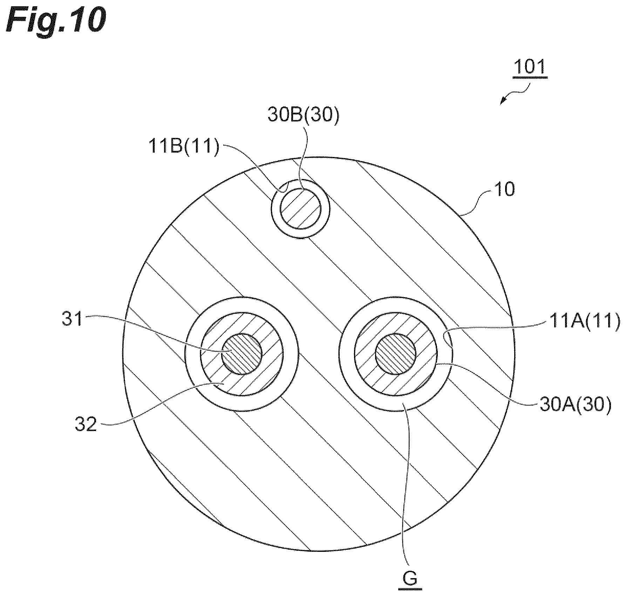

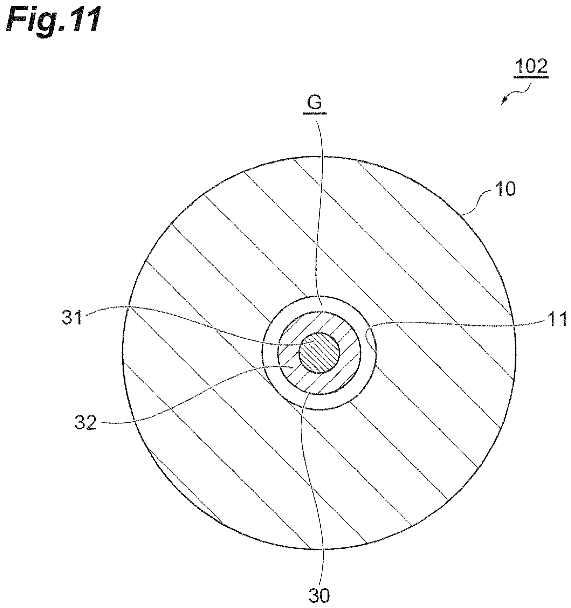

FIG. 10 is a cross-sectional view orthogonal to the axial direction AD2 of the MCF preform according to a modification. An MCF preform 101 according to the modification illustrated in FIG. 10 is the preform for the MCF having two cores. FIG. 11 is a cross-sectional view orthogonal to the axial direction AD2 of the optical fiber preform. An optical fiber preform 102 shown in FIG. 11 is a preform for an optical fiber having one core. In the case of one core, the marker 4 (see FIG. 1) is not necessary. As is clear from the cross section shapes shown in FIG. 7, FIG. 10 and FIG. 11, in the preform of the RIT method, the gap between the glass tube and the glass rod generally increases as the number of cores increases. As the gap increases, the possibility of more foreign substances mixing from the surrounding environment increases. That is, in general, as the number of cores increases, the influence of the cleanliness level of the surrounding environment is more likely to be received.

It is known that when a foreign substances are mixed in a preform, the cladding diameter varies during drawing or the mechanical strength decreases. Since such quality abnormality portions need to be removed, the number of foreign substances per unit fiber length needs to be kept at a certain value or less.

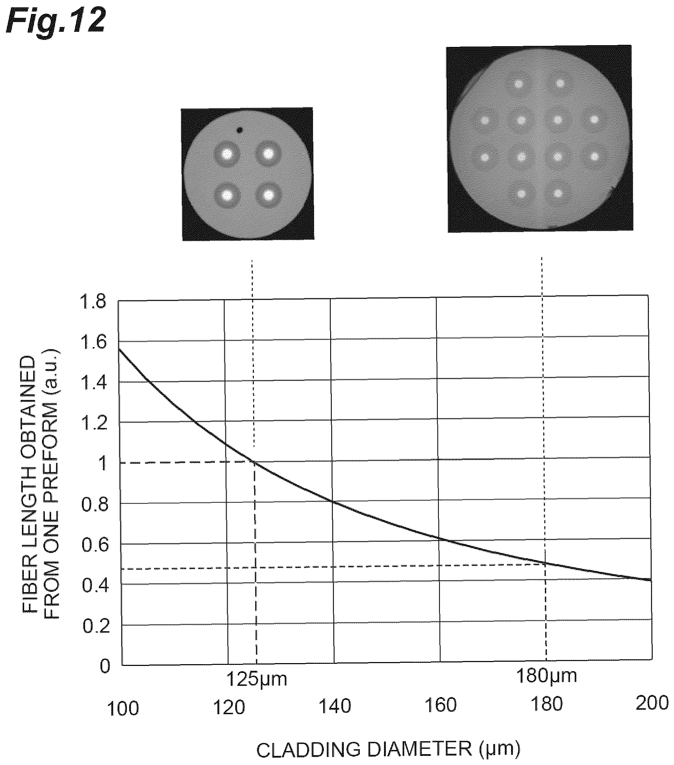

FIG. 12 is a graph showing the relationship between the cladding diameter and the fiber length obtained from one preform. Increasing the number of cores causes the cladding diameter to exceed the range equivalent to that of general-purpose single-mode optical fibers (125 µm), making it necessary to increase the cladding diameter. This results in a shorter fiber length from one preform. When the number of cores is four and the cladding diameter is 125 µm, the fiber length obtained from one preform is one, whereas in the case of 12 cores, the cladding diameter increases to 180 µm, resulting in a fiber length of 0.5 or less from one preform.

The tendency that the fiber length obtained from one preform becomes shorter as the number of cores increases is particularly remarkable in the case of a non-coupled MCF. This is because, in the non-coupled MCF, it is necessary to maintain a core-to-core distance above a certain level to reduce crosstalk. Even when the preform size and the number of foreign substances mixed in are the same, it can be said that drawing fibers with a thicker cladding diameter increases the number of quality abnormal portions per unit fiber length.

In summary, in general, the larger the number of cores, the larger the gap between the cladding tube and the glass rods, resulting in an increase in the number of foreign substances that mix with the preform from the surrounding environment. Further, the cladding diameter needs to be increased to accommodate more cores, which reduces the fiber length that can be obtained from the same size preform. As a result, the number of quality abnormal portions per unit fiber length tends to increase. In view of such a fact, the present inventors have conducted the following study in order to reduce the frequency of quality abnormalities of the fiber to a certain level or less.

The cross-sectional area of the glass tube 10 orthogonal to the axial direction AD2 before drawing (that is, before the drawing step S50) is denoted by S1 [m²], the sum of cross-sectional areas of the plurality of glass rods 30 orthogonal to the axial direction AD2 before drawing is denoted by S2 [m²], and the cross-sectional area of the MCF 1 orthogonal to the axial direction AD1 after drawing (that is, after the drawing step S50) is denoted by S3 [m²]. Here, the S1 does not include the cross-sectional area of the plurality of holes 11. The sum of cross-sectional areas of the plurality of holes 11 is S2 [m²] or more. Further, the S3 includes cross-sectional areas of the cores 2, a cross-sectional area of the cladding 3, and a cross-sectional area of the marker 4. The S3 does not include the cross-sectional area of the coating resins. That is, the cross-sectional area of the MCF 1 after drawing means the cross-sectional area of the glass portion. For simplicity, when the length of the MCF preform 100 is denoted by 1 m, the fiber length theoretically obtained from the MCF preform 100 is (S1 + S2)/S3/1000 [km]. When the allowable frequency of the quality abnormal portion is denoted by F [pieces/km], the number of foreign substances allowed to be mixed into the inside of the MCF preform 100 is (S1 + S2)/S3/1000 × F [pieces].

### (Specific Example 1)

As a specific example 1, it is considered that the MCF preform 100 is assembled in an environment of class 1000 (where the number of particles with a diameter of 0.5 µm or more is 1000 or less per cubic foot) that can be managed in practice. Since one foot equals to 0.3048 m, the foreign substance density inside the MCF preform 100 is given by 1000/0.30483 ≈ 35315 [pieces/m³].

When the plurality of glass rods 30 are inserted into the glass tube 10 during the inserting step S30 to assemble the MCF preform 100, the sum of the volumes of the gaps G in the MCF preform 100 should be (S1 + S2)/S3/1000 × F/(1000/0.3048³) [m³] = (S1 + S2)/S3 × 0.3048³ × 10⁻⁶ × F [m³] or less, thereby achieving the desired frequency of quality abnormalities.

As described above, since the length of the MCF preform 100 is 1 m, by keeping the sum of the area of the gap G in the cross section of the glass tube 10 that is orthogonal to the axial direction AD2 to (S1 + S2)/S3 × 0.3048³ × 10⁻⁶ × F [m²] or less, it is possible to achieve the desired frequency of quality abnormalities.

An allowable frequency F of the quality abnormality is, for example, 0.02 /km (one per 50 km on average). In this case, the sum of the area of the gap G is necessary to be (S1 + S2)/S3 × 0.3048³ × 10⁻⁶ × 0.02 [m²] = (S1 + S2)/S3 × 5.66 × 10⁻⁴ [mm²] or less.

The allowable frequency F of quality abnormality may be 0.05 /km (one per 20km on average). In this case, the sum of the area of the gap G is necessary to be (S1 + S2)/S3 × 0.3048³ × 10⁻⁶ × 0.05 [m²] = (S1 + S2)/S3 × 1.42 × 10⁻³ [mm²] or less.

The allowable frequency F of quality abnormality may be 0.10 /km (one per 10km on average). In this case, the sum of the area of the gap G is necessary to be (S1 + S2)/S3 × 0.3048³ × 10⁻⁶ × 0.10 [m²] = (S1 + S2)/S3 × 2.83 × 10⁻³ [mm²] or less.

That is, the inserting step S30 of the specific example 1 is performed by setting the each value of the sum of the area of the gap, the S1, the S2, and the S3 so that the sum of the area of the gap G before drawing in the cross section orthogonal to the axial direction AD2 of the glass tube 10 is (S1 + S2)/S3 × 5.66 × 10⁻⁴ [mm²] or less, (S1 + S2)/S3 × 1.42 × 10⁻³ [mm²] or less, or (S1 + S2)/S3 × 2.83 × 10⁻³ [mm²] or less. The inserting step S30 of the specific example 1 is performed in an environment having a cleanliness level higher than class 1000.

In the MCF preform 100 of the specific example 1, the sum of the areas of the gaps G before drawing in the cross section orthogonal to the axial direction AD2 of the glass tube 10 is (S1 + S2)/S3 × 5.66 × 10⁻⁴ [mm²] or less, (S1 + S2)/S3 × 1.42 × 10⁻³ [mm²] or less, or (S1 + S2)/S3 × 2.83 × 10⁻³ [mm²] or less, and the cleanliness level of the gaps G is higher than class 1000.

### (Specific Example 2)

When it is difficult to manage class 1000, the environment may be class 10000. Thus, as the specific example 2, it is considered that the MCF preform 100 is assembled in the environment of class 10000 (where the number of particles with a diameter of 0.5 µm or more is 10000 or less per cubic foot). Based on a similar discussion to the above, by limiting the sum of the area of the gap G in the cross section of the glass tube 10 that is orthogonal to the axial direction AD2 to (S1 + S2)/S3 × 0.3048³ × 10⁻⁷ × F [m²] or less, it is possible to achieve the desired frequency of quality abnormalities.

The allowable frequency F of the quality abnormality is, for example, 0.02 /km (one per 50km on average). In this case, the sum of the area of the gap G is necessary to be (S1 + S2)/S3 × 0.3048³ × 10⁻⁷ × 0.02 [m²] = (S1 + S2)/S3 × 5.66 × 10⁻⁵ [mm²] or less.

The allowable frequency F of quality abnormality may be 0.05 /km (one per 20km on average). In this case, the sum of the area of the gap G is necessary to be (S1 + S2)/S3 × 0.3048³ × 10⁻⁷ × 0.05 [m²] = (S1 + S2)/S3 × 1.42 × 10⁻⁴ [mm²] or less.

The allowable frequency F of quality abnormality may be 0.10 /km (one per 10 km on average). In this case, the sum of the area of the gap G is necessary to be (S1 + S2)/S3 × 0.3048³ × 10⁻⁷ × 0.10 [m²] = (S1 + S2)/S3 × 2.83 × 10⁻⁴ [mm²] or less.

That is, the inserting step S30 of the specific example 2 is performed by setting the each value of the sum of the area of the gap, the S1, the S2, and the S3 so that the sum of the area of the gap G before drawing in the cross section orthogonal to the axial direction AD2 of the glass tube 10 is (S1 + S2)/S3 × 5.66 × 10⁻⁵ [mm²] or less, or (S1 + S2)/S3 × 1.42 × 10⁻⁴ [mm²] or less. The inserting step S30 of the specific example 2 is performed in an environment having a cleanliness level higher than class 10000.

In the MCF preform 100 of the specific example 2, the sum of the areas of the gaps G before drawing in the cross section orthogonal to the axial direction AD2 of the glass tube 10 is (S1 + S2)/S3 × 5.66 × 10⁻⁵ [mm²] or less, (S1 + S2)/S3 × 1.42 × 10⁻⁴ [mm²] or less, or (S1 + S2)/S3 × 2.83 × 10⁻⁴ [mm²] or less, and the cleanliness level of the gaps G is higher than class 10000.

Although embodiments have been described above, the present disclosure is not necessarily limited to the above-described embodiments and modifications, and various changes can be made without departing from the scope of the present disclosure. For example, the MCF 1 may have a low-refractive-index portion disposed between adjacent cores 2 and surrounded by the cladding 3. In this case, the plurality of holes 11 include holes provided at positions corresponding to the low-refractive-index portion, and the plurality of glass rods 30 include glass rods corresponding to the low-refractive-index portion. The above embodiments and modifications may be combined as appropriate.

### REFERENCE SIGNS LIST

1 MCF
2 core
3 cladding
4 marker
10 glass tube
10a first end
10b second end
11, 11A, 11B hole
20 dummy tube
21 hole
30, 30A, 30B glass rod
40 sealing portion
50 coupler
51 vacuum pump
52 gas supply portion
100, 101 MCF preform
102 optical fiber preform
G gap
AD1, AD2 axial direction

## Claims

1. A method of manufacturing a multicore optical fiber including a plurality of cores and a cladding surrounding the plurality of cores, the method comprising:
inserting each of a plurality of glass rods into a corresponding one of a plurality of holes provided in a glass tube;
sealing a first end of the glass tube; and
drawing the glass tube and the plurality of glass rods while integrating the glass tube and the plurality of glass rods and reducing a pressure inside the plurality of holes through a second end of the glass tube,
wherein when a cross-sectional area of the glass tube before the drawing is denoted by S1 [m²], a sum of cross-sectional areas of the plurality of glass rods before the drawing is denoted by S2 [m²], and a cross-sectional area of the multicore optical fiber after the drawing is denoted by S3 [m²], the inserting is performed such that a sum of areas of gaps between the glass tube and the plurality of glass rods before the drawing in a cross section orthogonal to an axial direction of the glass tube is (S1 + S2)/S3 × 5.66 × 10⁻⁴ [mm²] or less, and
wherein the inserting is performed in an environment having a cleanliness level of higher than class 1000.

2. The method of manufacturing a multicore optical fiber according to claim 1, wherein the inserting is performed such that the sum of the areas of the gaps is (S1 + S2)/S3 × 1.42 × 10⁻³ [mm²] or less.

3. The method of manufacturing a multicore optical fiber according to claim 1, wherein the inserting is performed such that the sum of the areas of the gaps is (S1 + S2)/S3 × 2.83 × 10⁻³ [mm²] or less.

4. A method of manufacturing a multicore optical fiber including a plurality of cores and a cladding surrounding the plurality of cores, the method comprising:
inserting each of a plurality of glass rods into a corresponding one a plurality of holes provided in a glass tube;
sealing a first end of the glass tube; and
drawing the glass tube and the plurality of glass rods while integrating the glass tube and the plurality of glass rods and reducing a pressure inside the plurality of holes through a second end of the glass tube,
wherein when a cross-sectional area of the glass tube before the drawing is denoted by S1 [m²], a sum of cross-sectional areas of the plurality of glass rods before the drawing is denoted by S2 [m²], and a cross-sectional area of the multicore optical fiber after the drawing is denoted by S3 [m²], the inserting is performed such that a sum of areas of gaps between the glass tube and the plurality of glass rods before the drawing in a cross section orthogonal to an axial direction of the glass tube is (S1 + S2)/S3 × 5.66 × 10⁻⁵ [mm²] or less, and
wherein the inserting is performed in an environment having a cleanliness level of higher than class 10000.

5. The method of manufacturing a multicore optical fiber according to claim 4, wherein the inserting is performed such that the sum of the areas of the gaps is (S1 + S2)/S3 × 1.42 × 10⁻⁴ [mm²] or less.

6. The method of manufacturing a multicore optical fiber according to claim 4, wherein the inserting is performed such that the sum of the areas of the gaps is (S1 + S2)/S3 × 2.83 × 10⁻⁴ [mm²] or less.

7. A multicore optical fiber preform including a plurality of cores and a cladding surrounding the plurality of cores, the multicore optical fiber preform comprising:
a glass tube provided with a plurality of holes; and
a plurality of glass rods inserted into the plurality of holes,
wherein when a cross-sectional area of the glass tube before drawing is denoted by S1 [m²], a sum of cross-sectional areas of the plurality of glass rods before the drawing is denoted by S2 [m²], and a cross-sectional area of a multicore optical fiber after the drawing is denoted by S3 [m²], a sum of areas of gaps between the glass tube and the plurality of glass rods before the drawing in a cross section orthogonal to an axial direction of the glass tube is (S1 + S2)/S3 × 5.66 × 10⁻⁴ [mm²] or less, and
wherein the gaps have a cleanliness level of higher than class 1000.

8. A multicore optical fiber preform including a plurality of cores and a cladding surrounding the plurality of cores, the multicore optical fiber preform comprising:
a glass tube provided with a plurality of holes; and
a plurality of glass rods inserted into the plurality of holes,
wherein when a cross-sectional area of the glass tube before drawing is denoted by S1 [m²], a sum of cross-sectional areas of the plurality of glass rods before the drawing is denoted by S2 [m²], and a cross-sectional area of a multicore optical fiber after the drawing is denoted by S3 [m²], a sum of areas of gaps between the glass tube and the plurality of glass rods before the drawing in a cross section orthogonal to an axial direction of the glass tube is (S1 + S2)/S3 × 5.66 × 10⁻⁵ [mm²] or less, and
wherein the gaps have a cleanliness level of higher than class 10000.
